Europäisches Patentamt

European Patent Office

Office européen des brevets

(11) Publication number: **0 356 017**
A2

# EUROPEAN PATENT APPLICATION

(21) Application number: 89307627.3

(51) Int. Cl.⁴: **F17D 5/06** , G01M 3/16

(22) Date of filing: 27.07.89

(30) Priority: 18.08.88 JP 107926/88

(43) Date of publication of application:
28.02.90 Bulletin 90/09

(84) Designated Contracting States:
AT BE CH DE ES FR GB GR IT LI LU NL SE

(71) Applicant: JUNKOSHA CO. LTD.
25-25, Miyasaka 2-chome
Setagaya-ku Tokyo 156(JP)

(72) Inventor: Akiba, Juji
1-27-202, 494 Shimo-Kayama Hitaka-machi
Iruma-gun Saitama(JP)

(74) Representative: Knott, Stephen Gilbert et al
MATHISEN, MACARA & CO. The Coach
House 6-8 Swakeleys Road
Ickenham Uxbridge Middlesex UB10 8BZ(GB)

(54) Liquid leakage detection apparatus.

(57) Liquid leakage detection apparatus comprises an elongate detector component (1) including first, second and third conductors bundled together side by side, the first conductor (31) being convered by insulation (32) and having its trailing end (31b) connected to the trailing end (4b) of the second conductor (4), detector means (6) connected to the leading ends (31a,4a) of the first and second conductors (31,4) for detecting and indicating a potential difference between the first and second conductors, and power supply means (9) having one of its terminals connected to the leading ends of the first and second conductors through respective, known resistances (7,8), the second conductor (4) being bare, and the third conductor (51) being covered by a porous insulation material (52) and being connected to the other terminal of the power supply (9) such that a Wheatstone Bridge circuit is formed when the second conductor (4) and the third conductor (51) are short circuited by a leaking liquid.

_Fig.1._

## LIQUID LEAKAGE DETECTION APPARATUS

The present invention relates to liquid leakage detection apparatus for monitoring areas subject to leakage, and which can perform this monitoring function over a wide area.

Liquid leakage detecting devices are used in a variety of locations, for example to detect water leakage from water pipes in multi-unit dwellings, and to detect the leakage of chemicals from storage tanks and pipelines in chemical plants.

Various leakage detection principles may be used in such devices, and one particularly well-known operating principle employs a detector component comprising a pair of electrodes which constitute a portion of a detection circuit. An electrical change is detected in the detection circuit when the electrodes of the detector component are short-circuited, and thus electrically connected, by the target liquid, and leakage is thus detected as a result of detection of this electrical change.

Conventional liquid leakage detecting devices are able to function satisfactorily as long as the area in which it is necessary to monitor the possible occurrence of leakage is relatively restricted. In cases where it is desired not only to monitor a broad area for the possible occurrence of leakage, but also to ascertain exactly where leakage is occurring within this broad area when leakage does occur, e.g., in cases where a pipeline is monitored for leakage, it is necessary to divide the area into small segments and to install a detector component in each segment, with these detector components being centrally controlled. Such a system is disadvantageous in that it is expensive, a considerable amount of labour is expended in installing the detector components, and a complicated monitoring system is required. Furthermore, the use of such a system results in an increase in equipment operating costs.

The present invention has evolved in light of the problems encountered with conventional systems, and aims to provide a liquid leakage detection apparatus which makes it possible to ascertain in detail any locations where leakage may occur over a relatively wide area, without complicating the detector component structure.

According to the invention there is provided liquid leakage detection apparatus comprising an elongate detector component comprising first, second and third conductors bundled together in side by side relationship, the first conductor being covered by insulation material and having its trailing end connected to the trailing end of the second conductor, detector means connected to the leading end of each of the first and second conductors for detecting and indicating a potential difference between said first and second conductors, and power supply means having one of its terminals connected to the leading ends of the first and second conductors through respective, known resistances, one of the second and third conductors being bare and the other of said second and third conductors being covered by a porous insulation material, and the third conductor being connected to the other terminal of the power supply means such that a Wheatstone Bridge circuit is formed when said second and third conductors are short-circuited by a leaking liquid.

In a preferred embodiment of the present invention the liquid leakage detection apparatus is characterized by the fact that (a) a long detector component is formed by bundling together (i) a first conductor which is covered by an insulator, (ii) a bare second conductor which is positioned parallel to the first conductor, and whose trailing end is connected with the trailing end of the first conductor, and (iii) a third conductor which is positioned parallel to the second conductor in a non-contact state, being insulated with a porous, braided insulation, (b) the leading end of the first conductor and the leading end of the second conductor in the detector component are connected with each other through detecting means which detects any potential difference, (c) the leading ends of the first conductor and the second conductor are also connected to one of the electrodes of a power supply through respective known resistances, and (d) the third conductor is connected to the other electrode of the power supply so that a Wheatstone Bridge circuit is formed when the second conductor and third conductor are short-circuited by a leaking liquid.

In use, the detector component is installed in the area that is to be monitored for leakage in a manner similar to the way in which electrical wiring is installed.

Under ordinary conditions, i.e., when there is no liquid leakage, the second and third conductors are electrically insulated from each other, and the detection circuit is open so that no Wheatstone Bridge circuit is formed by the first, second and third conductors. Accordingly, no potential difference is generated between the leading ends of the first and second conductors.

When leakage occurs, however, the second conductor and the third conductor are short-circuited, and thus electrically connected, by the leaking liquid, provided this is electrically conductive as in the case of water. A Wheatstone Bridge circuit is then formed by the first, second and third conductors, the detector means, the known resistances and the power supply. As a result, a potential difference, which can be correlated to the location of the liquid leakage, is generated between the leading ends of the first and second conductors, and this potential difference is detected by the detector means.

One example of apparatus in accordance with the present invention will now be described with reference to the accompanying drawings, in which:-

Figure 1 is a shcematic circuit diagram of the liquid leakage detection apparatus of the present example; and,

Figure 2 is a cross-section of the detector component of the apparatus.

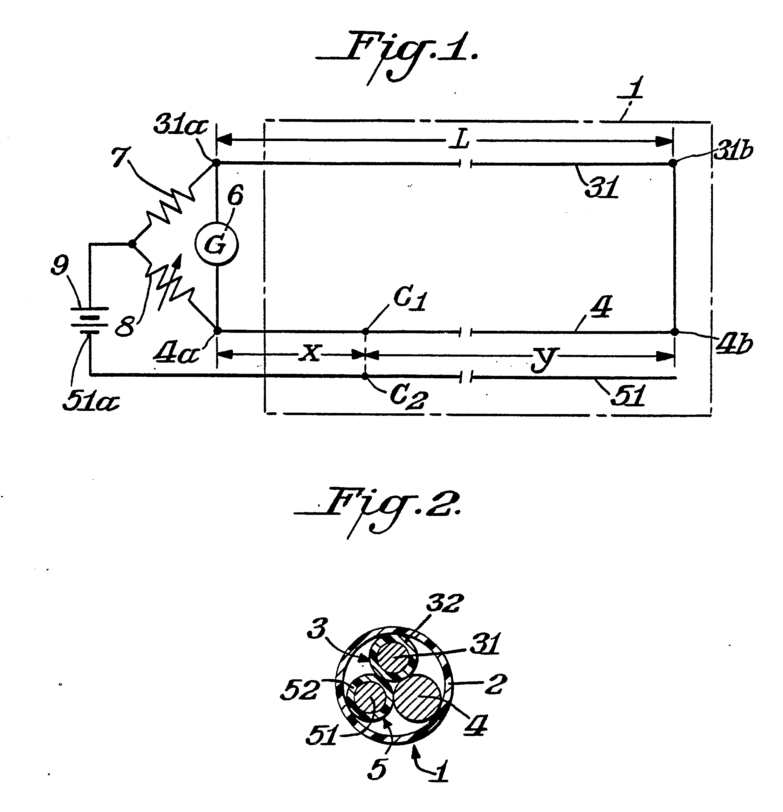

As shown by Figure 2, the detector component 1 comprises two insulated wires 3,5 and one bare conductor 4 bundled together side by side by means of a porous braid 2 consisting of an insulating material such as a polyester braid, so that a structure resembling a single, long sheathed cable is formed.

One of the insulated wires comprises a silver-plated conductor 31, forming the first conductor of the detector component, and an impermeable insulator 32, which is preferably of a polytetrafluoroethylene-hexafluoro-propylene copolymer, covering the conductor 31. The other insulated wire 5 comprises a silver-plated conductor 51, forming the third conductor of the detector component, and a porous insulator 52, preferably a polyester braid, which covers the conductor 51. The bare conductor 4 is preferably a stainless steel wire and forms the second conductor of the detector component.

The respective conductors 4,31,51 of the detector component 1 form part of a detection circuit. As shown in Figure 1, the trailing end 31b of the conductor 31 and the trailing end 4b of the conductor 4 are electrically connected to each other at the tip of the detector component 1. The trailing end of the conductor 51 is electrically insulated from the trailing ends 4b and 31b.

In other words, the structure of the detector component 1 may also be described as comprising the conductors 4,31,51 positioned parallel to each other inside the braid 2, the conductor 31 and conductor 4 being electrically insulated from each other by the insulator 32, except for a connection at the respective leading ends 31a, 4a of the conductors and the connection at the respective trailing ends 31b, 4b of the conductors, and the conductor 4 and conductor 51 being maintained in a non-contacting state by the porous braid 52.

The leading end 31a of the conductor 31 and the leading end 4a of the conductor 4 are electrically connected to each other through detector means 6 in the form of a galvanometer. The leading end 31a of the conductor 31 is connected to one terminal of a battery 9, forming the power supply, through a fixed resistor 7 having a resistance value of $R_1$, and the leading end 4a of the conductor 4 is connected to the same terminal through a variable resistor 8. The leading end 51a of the conductor 51 is connected to the other terminal of the battery 9.

The operation of the liquid leakage detection apparatus will now be described using, as an example, a case where the apparatus is used to monitor liquid leakage from a pipeline in a chemical plant. The detector component 1 is installed along the length of the pipeline adjacent the bottom of the pipeline, using an installation procedure similar to that used for electrical wire installation.

When there is no leakage from the pipeline, the conductor 4 and the conductor 51 are insulated from each other within the detector component 1. Accordingly, under such conditions the detection circuit remains open and no Wheatstone Bridge circuit is formed. Thus, no potential difference is generated between the leading end 31a of the conductor 31 and the leading end 4a of the conductor 4, and the galvanometer 6 shows no deflection.

When liquid leakage occurs at an intermediate point on the pipeline, the leaking liquid penetrates through the braid 2 of the detector component 1, and also penetrates through the braid 52 of the insulated wire 5, so that the conductor 4 and the conductor 51 are short-circuited by the liquid and are thus electrically connected to each other at this point. As a result, a closed Wheatstone Bridge circuit is formed by the power supply 9, fixed resistor 7, conductor 31, conductor 4, variable resistor 8, galvanometer 6 and conductor 51. Accordingly, a potential difference dependent on the location of the short-circuit, i.e., the location of the leakage, is generated between the leading end 31a of the conductor 31 and the leading end 4a of the conductor 4, and this potential difference is detected by the galvnometer 6.

As shown in Figure 1, L represents the length of the conductor 31 and also the length of the conductor 4. A short-circuit is considered to have taken place between Point $C_1$ on the conductor 4 and point $C_2$ on the conductor 51 as indicated by a broken line. In this case x represents the distance between the leading end 4a of the conductor 4 and the short-circuit point $C_1$, and y represents the distance between the short-circuit point $C_1$ and the trailing end 4b of the conductor 4.

Assuming that $r_1$ represents the resistance per unit length of the conductor 31, that $r_2$ represents the resistance per unit length of the conductor 4, and that $R_2$ is the resistance value of the variable resistor 8 when the variable resistor 8 is adjusted so that no electric current flows through the galvanometer 6, i.e., so that no potential difference exists between the leading end 31a of the conductor 31 and the leading end 4a of the conductor 4, then

$R_1 r_2 x = R_2(LR_1 + r_2 y)$

Thus, since $L = x + y$,

$x = R_2 L(r_1 + r_2)/r_2(R_1 + R_2)$

Accordingly, the location where the leakage has occurred can be ascertained precisely, providing a liquid leakage monitoring procedure which allows a finer resolution than is possible using conventional devices.

The present invention is not limited to the example described. Various other configurations may be used. For example, the braid 2 of the detector component is not absolutely necessary. It would be possible to twist the insulated wires 3,5 and the conductor 4 together to form a twisted-wire bundle.

Also, the first conductor 31 and the third conductor 51 are not limited to silver-plated conductors, nor is the second conductor 4 limited to a stainless steel wire. It would of course be possible to use other appropriate materials for these conductors.

**Claims**

1. Liquid leakage detection apparatus characterized by an elongate detector component (1) comprising first, second and third conductors (31,4,51) bundled together in side by side relationship, the first conductor (31) being covered by insulation material (32) and having its trailing end (31b) connected to the trailing end (4b) of the second conductor (4), detector means (6) connected to the leading end (31a,4a) of each of the first and second conductors (31,4) for detecting and indicating a potential difference between said first and second conductors, and power supply means (9) having one of its terminals connected to the leading ends (31a,4a) of the first and second conductors through respective, known resistances (7,8), one of the second and third conductors (4,51) being bare and the other of said second and third conductors (4,51) being covered by a porous insulation material (52), and the third conductor (51) being connected to the other terminal of the power supply means (9) such that a Wheatstone Bridge circuit is formed when said second and third conductors (5,51) are short-circuited by a leaking liquid.

2. Apparatus according to claim 1, in which the second conductor (4) is bare and the third conductor (51) is covered by the porous insulation material (52).

3. Apparatus according to claim 1 or claim 2, in which the detector component (1) comprises a porous braid (2) of insulating material surrounding the first, second and third conductors (31,4,51).

## Fig.1.

## Fig.2.